# EUROPÄISCHE PATENTSCHRIFT

(11) **EP 2 014 504 B1**
(45) Veröffentlichungstag und Bekanntmachung des Hinweises auf die Patenterteilung: **30.06.2010**
(21) Anmeldenummer: 08160006.6
(22) Anmeldetag: 09.07.2008
(51) Int. Cl.: B60K 26/02

(54) **Bedienvorrichtung zum Ansteuern mindestens einer Zustandsgröße eines landwirtschaftlichen oder industriellen Nutzfahrzeugs**
Operational device for controlling at least one variable of an agricultural or industrial truck
Dispositif de commande destiné à la commande d'au moins une taille d'état d'un véhicule utilitaire agricole ou industriel

(30) Priorität: 11.07.2007 DE 102007032309
(43) Veröffentlichungstag der Anmeldung: 14.01.2009
(73) Patentinhaber: Deere & Company, Moline, IL 61265-8098 (US)
(72) Erfinder: Tarasinski Dr., Nicolai, 67227, Frankenthal (DE); Hahn, Klaus, 68199, Mannheim (DE)
(74) Vertreter: Dehnhardt, Florian Christopher

(56) Entgegenhaltungen:
- EP-A- 0 856 432
- EP-A- 1 777 094
- DE-A1- 10 209 206
- DE-A1- 19 904 626
- DE-A1- 19 923 012

## Beschreibung

Die vorliegende Erfindung betrifft eine Bedienvorrichtung zum Ansteuern mindestens einer Zustandsgröße eines landwirtschaftlichen oder industriellen Nutzfahrzeugs. Mit einem Lenkrad der Bedienvorrichtung ist die Fahrtrichtung des Nutzfahrzeugs von einem Bediener einstellbar. Des Weiteren betrifft die vorliegende Erfindung ein Verfahren zum Ansteuern mindestens einer Zustandsgröße eines landwirtschaftlichen oder industriellen Nutzfahrzeugs.

Solche Bedienvorrichtungen sind seit langem aus dem Stand der Technik bekannt. Mit ihnen kann beispielsweise die Geschwindigkeit, die Lenkung, eine Arbeitsfunktion oder eine Getriebeeinstellung des Nutzfahrzeugs eingestellt werden. Als Nutzfahrzeug in diesem Zusammenhang kommen insbesondere landwirtschaftliche Nutzfahrzeuge, also z.B. Traktoren, Erntemaschinen, Mähdrescher, Feldhäcksler und selbstfahrende Spritzen, aber auch industrielle Nutzfahrzeuge, also beispielsweise Baufahrzeuge, Planierraupen, Planiermaschinen, Tieflöffelbagger, Laderfahrzeuge, Kipper, Kräne und Teleskoplader, in Frage.

Weiterhin ist die so genannte Kraftrückführung oder auch Force-Feedback aus dem Bereich der Simulatortechnik bekannt und dient dort der realistischen Darstellung von Kräften auf Bedienelemente, die im Betrieb einer realen Maschine auftreten und von dem Bediener aufgebracht bzw. überwunden werden müssen. Hierbei ist eine Stelleinrichtung bzw. ein Aktuator vorgesehen, mit welcher bzw. mit welchem das Lenkrad mit einer Kraft beaufschlagbar ist. Hiermit kann also das Lenkrad, das in einem solchen Fall lediglich ein elektrisches Signal über seinen Bedienzustand erzeugt, mit der Stelleinrichtung mit mindestens einer entsprechenden Kraft beaufschlagt werden, so dass das Lenkrad eine übliche Bedienungscharakteristik aufweist.

Bei vielen Fahrzeugen sind die Bedienelemente mechanisch mit dem durch sie gestellten Maschinenteil verbunden, beispielsweise das Lenkrad über die Lenkwelle mit dem Lenkgestänge. Fällt eine solche mechanische Verbindung auf Grund einer elektronischen Ansteuerung der jeweiligen Komponente weg, so fehlt eine entsprechende Rückkopplung über die Zustände des Maschinenteils und der zu simulierenden Maschine bzw. des zu simulierenden Fahrzeugs an den Bediener. In einem solchen Fall bedient man sich der aus der Simulatortechnik bekannten Technologie, indem man das Lenkrad mit Hilfe einer Stelleinrichtung, welche von einer geeigneten Steuereinrichtung angesteuert wird, derart mit Kräften beaufschlagt, dass eine für das Lenkrad übliche Bedienungscharakteristik erzeugt werden kann. Hierdurch wird einem Bediener eine möglichst realistische Bedienung der jeweiligen angesteuerten Funktion simuliert.

Eine weitergehende Unterstützung bei der Bedienung eines Nutzfahrzeugs wird allenfalls durch Warnanzeigeelemente dem Bediener visuell oder gegebenenfalls akustisch zur Kenntnis gebracht. Hierbei sind vor allem Warnleuchten vorgesehen, welche auf einen kritischen Zustand des Nutzfahrzeugs hinweisen, beispielsweise den der überhöhten Temperatur des Motoröls oder der Kühlflüssigkeit über einem vorgebbaren oberen Grenzwert.

Eine Bedienvorrichtung mit allen Merkmalen des Oberbegriffs des Anspruchs 1 ist durch Dokument DE 199 23 012 A1 bekannt.

Der vorliegenden Erfindung liegt daher die Aufgabe zugrunde, eine Bedienvorrichtung der eingangs genannten Art anzugeben und weiterzubilden, durch welche die vorgenannten Probleme überwunden werden. Insbesondere soll einem Bediener eines Nutzfahrzeugs eine weitergehende Unterstützung bei der Bedienung des Nutzfahrzeugs gegeben werden, mit welcher ein Bediener auch auf einen kritischen oder nicht optimalen Betriebszustand des Nutzfahrzeugs in verbesserter Weise aufmerksam gemacht wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Bedienvorrichtung der eingangs genannten Art ein Lenkrad, eine Stelleinrichtung, mindestens einen Sensor und eine Steuereinrichtung auf. Das Lenkrad ist zum Einstellen der Fahrtrichtung des Nutzfahrzeugs von dem Bediener betätigbar. Mit der Stelleinrichtung bzw. einem Aktuator ist das Lenkrad mit einer Kraft beaufschlagbar. Mit dem mindestens einen Sensor ist eine Größe, die eine Zustandsgröße des Nutzfahrzeugs repräsentiert, detektierbar und der Steuereinrichtung übermittelbar. Mit der Steuereinrichtung ist eine Zustandsgröße des aktuellen Betriebszustands des Nutzfahrzeugs ermittelbar. Mit der Steuereinrichtung ist in Abhängigkeit des aktuellen Betriebszustands des Nutzfahrzeugs die Stelleinrichtung derart ansteuerbar, dass das Lenkrad mit einer vorgebbaren veränderten Kraft beaufschlagbar ist, um dem Bediener einen unsicheren Betriebszustand des Nutzfahrzeugs oder einen unsicheren Betriebszustand mindestens einer Arbeitsfunktion des Nutzfahrzeugs wahrnehmbar zu machen. Bei der veränderten Kraft kann es sich beispielsweise um eine konstante oder um eine veränderliche Kraft handeln.

Erfindungsgemäß ist zunächst erkannt worden, dass eine Bedienung des Nutzfahrzeugs insbesondere dann vereinfacht und optimiert werden kann, wenn dem Bediener nicht lediglich durch visuelle Anzeigeinstrumente ein unsicherer oder nicht optimaler Betriebszustand dargestellt wird. Üblicherweise weist das Nutzfahrzeug ein Drehzahlmessinstrument zur Anzeige der Drehzahl des Verbrennungsmotors auf. Falls der Verbrennungsmotor dauerhaft mit einer erhöhten Drehzahl betrieben wird, die über der für den Dauerbetrieb maximal zulässigen Drehzahl liegt, erfolgt bei einem herkömmlichen Nutzfahrzeug darüber hinaus keine weitere Anzeige, von einer erhöhten Lärmentwicklung des Verbrennungsmotors abgesehen, welche bei einer relativ gut schallisolierten Kabine des Nutzfahrzeugs auch akustisch nicht in allen Fällen wahrgenommen werden kann. Dies kann zu einem Motorschaden führen und daher einen längeren Nutzungsausfall des Nutzfahrzeugs und somit hohe Kosten zur Folge haben. In erfindungsgemäßer Weise ist daher vorgesehen, dass gegebenenfalls über eine akustische und/oder optische Warneinrichtung hinaus dem Bediener in taktiler Weise ein solcher Betriebszustand des Nutzfahrzeugs zur Kenntnis gebracht wird. Dies ist insbesondere dann vorteilhaft, wenn der Bediener situationsbedingt in irgendeiner Weise unmittelbar reagieren muss, um beispielsweise eine Überlastung einer Komponente des Nutzfahrzeugs oder einen Unfall des Nutzfahrzeugs rechtzeitig verhindern zu können.

Die Steuereinrichtung kann anhand des Signals des mindestens einen Sensors berechnen, in welche Richtung bzw. Stellung das Lenkrad zu bewegen wäre, um den gewünschten Zweck zu erreichen. Im Allgemeinen ist der Trend der Effekte bekannt, der bei der Verstellung einer Zustandsgröße hervorgerufen wird. Es wird die Stellung und/oder Verstellrichtung des Lenkrads bestimmt, die einen sicheren Betriebszustand zur Folge hätte. Die Stelleinrichtung wird entsprechend des Ergebnisses eines Vergleichs zwischen der berechneten günstigen Bewegungsrichtung und/oder Stellung und der aktuellen Bewegungsrichtung und/oder Stellung des Lenkrads angesteuert.

Der Steuereinrichtung wird vorzugsweise weiterhin eine Information über die mittels eines Lenkradpositionssensors erfasste aktuelle Stellung des Lenkrads zugeführt, die bei der Berechnung der wünschenswerten bzw. nicht wünschenswerten Verstellrichtung bzw. Stellung des Lenkrads berücksichtigt werden kann. In einigen Anwendungsfällen ist aber die Berücksichtigung der Stellung des Lenkrads nicht erforderlich. Denkbar ist auch, dass die Steuereinrichtung eine Information über die Stellung des Lenkrads und/oder dessen Bewegungsrichtung aus dem Signal des mindestens einen Sensors bzw. dessen Änderung ableitet.

Die Stelleinrichtung kann grundsätzlich auf zwei verschiedene Arten betrieben werden. Einerseits kann sie einen Verstellwiderstand bzw. eine Amplitude und/oder Frequenz der mechanischen Anregung des Lenkrads erzeugen, der bzw. die proportional zur Differenz zwischen der derzeitigen Position des Lenkrads und einer berechneten optimalen Position des Lenkrads ist. Andererseits kann die Stelleinrichtung auf eine andere Weise auf das Lenkrad einwirken, welche stetig und vorzugsweise monoton steigend von dieser Differenz abhängt. Ist das Lenkrad also besonders ungünstig eingestellt, ist es sehr schwer, es in eine noch ungünstigere Stellung zu verbringen, bzw. es vibriert recht stark und/oder schnell. In die entgegengesetzte Richtung kann es jedoch leicht bewegt werden, bzw. die Schwingungen lassen nach oder verschwinden. Andererseits besteht die Möglichkeit, dass die Stelleinrichtung erst dann wirksam ist, wenn die genannte Differenz einen bestimmten Schwellwert überschreitet. Dabei kann die Stelleinrichtung einen stufenartig ansteigenden Verstellwiderstand bewirken bzw. die Amplitude und/oder Frequenz der mechanischen Anregung in Stufen verändern. Der Verstellwiderstand bzw. die Amplitude und/oder Frequenz der mechanischen Anregung des Lenkrads steigt in dieser Ausführungsform somit in mindestens einer Stufe an. Ein Vorteil liegt in der leichteren technischen Realisation, da die Stelleinrichtung im einfachsten Fall nur ein-und ausschaltbar zu gestalten ist.
Mit der Steuereinrichtung kann in Abhängigkeit des aktuellen Betriebszustands des Nutzfahrzeugs die Stelleinrichtung auch derart ansteuerbar sein, dass das Lenkrad mit einer vorgebbaren veränderten Kraft beaufschlagbar ist, um dem Bediener einen nicht optimalen Betriebszustand des Nutzfahrzeugs oder einen nicht optimalen Betriebszustand mindestens einer Arbeitsfunktion wahrnehmbar zu machen.

Gemäß einer bevorzugten Ausgestaltung der vorliegenden Erfindung wird durch das Beaufschlagen des Lenkrads mit der einen vorgebbaren veränderten Kraft die Bedienungscharakteristik des Lenkrads veränderbar ausgestaltet. So kann beispielsweise das Lenkrad mit einer Kraft derart beaufschlagt werden, dass dieses insgesamt nur unter erhöhter Kraftaufwendung von dem Bediener betätigt werden kann. Mit anderen Worten wird im Rahmen dieser Ausgestaltung die Kraft, mit welcher das Lenkrad durch die Stelleinrichtung bei einem normalen Betriebszustand des Nutzfahrzeugs beaufschlagt wird, um einen konstanten Wert (Offset) erhöht, wenn kein optimaler und/oder sicherer Betriebszustand des Nutzfahrzeugs vorliegt.

Mit dem mindestens einen Sensor wird eine Größe detektiert, welche eine Zustandsgröße des Nutzfahrzeugs repräsentiert. Eine Zustandsgröße des Nutzfahrzeugs kann beispielsweise die Geschwindigkeit, die Beschleunigung, die Fahrtrichtung, der aktuell eingestellte Lenkwinkel, die Abweichung von einer vorgegebenen Fahrtrichtung, die räumliche Position des Nutzfahrzeugs, die Gierbewegung oder das Giermoment des Nutzfahrzeugs, die räumliche Position eines Hindernisses, die Drehzahl einer Motor- oder Getriebewelle, die Drehzahl mindestens eines Rads, das von einer Welle übertragene Drehmoment, das von einem Antriebsaggregat abgegebene Drehmoment, die Leistung oder die Auslastung eines Antriebsaggregats, der Energieverbrauch oder der Kraftstoffverbrauch eines Verbrauchers, der Schlupf des Nutzfahrzeugs über dem Untergrund, eine Achslast, der Druck oder der Volumenstrom oder die Volumenstromänderung einer Hydraulikflüssigkeit, der Ausfahrweg eines Zylinders, der Fahrzustand, die Triebkraft des Nutzfahrzeugs und/oder die auf das Nutzfahrzeug wirkende Kraft eines Anhängers und/oder eines Arbeitsgeräts sein. Eine auf das Nutzfahrzeug wirkende Kraft kann insbesondere eine Zugkraft, eine Querkraft und/oder eine Stützkraft sein. Dementsprechend kann mindestens ein Sensor vorgesehen sein, mit welchem eine Größe detektierbar ist, welche die Ermittlung der Geschwindigkeit, der Beschleunigung, der Fahrtrichtung, des aktuell eingestellten Lenkwinkels, der Abweichung von einer vorgegebenen Fahrtrichtung, der räumlichen Position des Nutzfahrzeugs (relativ zu einem Bezugssystem) und/oder die Bestimmung der räumlichen Position eines Hindernisses ermöglicht. Mit dem mindestens einen Sensor kann auch eine Größe detektierbar sein, welche die Ermittlung der Drehzahl einer Motor- oder Getriebewelle, der Drehzahl mindestens eines Rads, des von einer Welle übertragenen Drehmoments, des von einem Antriebsaggregat abgegebenen Drehmoments, der Leistung oder der Auslastung eines Antriebsaggregats, des Energieverbrauchs oder des Kraftstoffverbrauchs eines Verbrauchers, des Schlupfs des Nutzfahrzeugs über dem Untergrund, der Beschaffenheit des Untergrunds, einer Achslast, des Gewichts eines Bedieners, des Drucks oder des Volumenstroms oder einer Volumenstromänderung einer Hydraulikflüssigkeit, des Ausfahrwegs eines Zylinders, insbesondere des Lenkzylinders, der auf das Nutzfahrzeug wirkenden Kraft eines Anhängers und/oder eines Arbeitsgeräts, insbesondere einer Zugkraft, einer Querkraft und/oder einer Stützkraft, des Fahrzustands und/oder der Triebkraft des Nutzfahrzeugs ermöglicht. Üblicherweise wird der mindestens eine Sensor derart ausgestaltet sein, dass dieser eine entsprechende Größe detektiert bzw. erfasst. Sodann wird ein von der detektierten Größe abhängiges (elektrisches) Signal erzeugt, welches der Steuereinrichtung übermittelt wird. Mit der Steuereinrichtung kann dann in Abhängigkeit des aktuellen Betriebszustands des Fahrzeugs ein Signal bzw. eine Signalfolge erzeugt und hiermit die mindestens eine Stelleinrichtung entsprechend angesteuert werden.

Im Konkreten weist die Stelleinrichtung mindestens einen Aktuator auf. Der Aktuator kann elektrisch, pneumatisch oder hydraulisch betätigbar sein. Somit kann der Aktuator in Abhängigkeit seiner Betätigung das Lenkrad mit einer veränderlichen bzw. variablen Kraft beaufschlagen. Die Stelleinrichtung kann des Weiteren einen weiteren Aktuator aufweisen, welcher das Lenkrad mit einer konstanten Kraft bzw. mit einer konstanten Kraftkennlinie beaufschlagt.

Ein optimaler Betriebszustand des Nutzfahrzeugs liegt insbesondere dann vor, wenn das Nutzfahrzeug einen minimierten Kraftstoffverbrauch aufweist und/oder wenn die Fahrgeschwindigkeit oder der Wirkungsgrad des Nutzfahrzeugs bzw. einzelne Komponenten davon optimal an den aktuellen Betriebszustand des Nutzfahrzeugs angepasst ist bzw. sind. Mit anderen Worten werden einzelne Komponenten bzw. das gesamte Nutzfahrzeug derart eingestellt, dass deren bzw. dessen Wirkungsgrad für den aktuellen Betriebszustand des Nutzfahrzeugs optimiert bzw. daran angepasst ist. Ein aktueller Betriebszustand kann beispielsweise das Pflügen mit einem Traktor sein, wobei also an dem Traktor ein Pflug adaptiert ist. In einem weiteren Beispiel kann ein anderer aktueller Betriebszustand das Einsähen von Pflanzensamen betreffen, wenn an dem Traktor eine Sämaschine adaptiert ist. Ein optimaler Betriebszustand wird auch für den Fall angestrebt, in welchem das mit dem Nutzfahrzeug und gegebenenfalls mit einem an dem Nutzfahrzeug adaptierten Arbeitsgerät bearbeitete bzw. verarbeitete Gut einen optimalen Durchsatz oder Umsatz aufweist. Ein Beispiel hierfür kann ein Traktor mit einer an dem Traktor adaptierten Rundballenpresse darstellen. In einem optimalen Betriebszustand wird die Rundballenpresse derart betrieben, dass das mit der Rundballenpresse aufgenommene Heu mit einer maximalen Fördergeschwindigkeit (maximaler Durchsatz) aufgenommen wird, ohne eine Verstopfung zu verursachen. Ein weiteres Beispiel eines optimalen Betriebszustands ist, wenn die Fahrstrecke des Nutzfahrzeugs eine minimale Abweichung von einer vorgebbaren Soll-Fahrstrecke aufweist. Eine Soll-Fahrstrecke kann beispielsweise mit einem auf einem Computer des Nutzfahrzeugs ausgeführten Anwendungsprogramm in Verbindung mit einem Navigationssystem errechnet und somit vorgegeben werden. Eine Rückmeldung mit einem System zur Bestimmung der Position des Nutzfahrzeugs (beispielsweise GPS) und ein Vergleich zur aktuellen Ist-Position des Nutzfahrzeugs ist hierfür Voraussetzung.

Ein sicherer Betriebszustand des Nutzfahrzeugs liegt insbesondere dann vor, wenn die Motorauslastung, die Neigung des Nutzfahrzeugs gegenüber der Waagrechten, das Giermoment, die Ballastierung des Nutzfahrzeugs mit einem gegebenenfalls daran adaptierten Arbeitsgerät, die im Antriebsstrang vorherrschende Drehmomentbelastung bzw. die im Antriebsstrang vorliegende Drehzahl rotierender Bauteile und/oder die Geschwindigkeit des Nutzfahrzeugs (auch bei Kurvenfahrt) einen entsprechenden vorgebbaren Grenzwert nicht überschreitet. Weitere sicherheitsrelevante Parameter sind beispielsweise auch die eingangs erwähnte Motoröltemperatur, die Temperatur der Kühlmittelflüssigkeit des Verbrennungsmotors des Nutzfahrzeugs oder der Druck einer hydraulischen Bremsanlage. Dementsprechend liegt ein sicherer Betriebszustand des Nutzfahrzeugs dann vor, wenn die entsprechenden vorgebbaren Grenzwerte nicht über- bzw. unterschritten werden. Ein sicherer Betriebszustand des Nutzfahrzeugs liegt auch dann vor, wenn sich kein Hindernis im Fahrbereich oder Wirkungsbereich des Nutzfahrzeugs befindet. Mit anderen Worten liegt ein unsicherer Betriebszustand dann vor, wenn die entsprechenden vorgebbaren Grenzwerte über- bzw. unterschritten werden und/oder wenn sich ein Hindernis im Fahrbereich oder Wirkungsbereich des Nutzfahrzeugs befindet.

Insbesondere im Falle von Zustandsgrößen, welche an dem Nutzfahrzeug vom Bediener nicht unmittelbar wahrgenommen werden können, ist die erfindungsgemäße Bedienvorrichtung für eine sichere und/oder optimale Bedienung des Nutzfahrzeugs hilfreich. Dies kann vor allem bei am Nutzfahrzeug befindlichen Anhängern (z.B. eine Spritze mit einem ausgefahrenen Spritzgestänge) relevant sein, welche beispielsweise aufgrund von Bodenunebenheiten Roll- und/oder Gierbewegungen ausführen und hierbei das aus Nutzfahrzeug und Anhänger bestehende Gespann in einen gefährlichen Gesamtzustand bringen können, insbesondere bei Kurvenfahrten. Das Lenkrad kann in einem solchen Fall derart mit einer Kraft beaufschlagt werden, dass der Bediener zu einer Auslenkung des Lenkrads im Sinne eines geringeren Kurvenradius des Gespanns angeleitet wird.

Die Stelleinrichtung kann von der Steuereinrichtung derart angesteuert werden, dass die Stelleinrichtung das Lenkrad mit einer im Wesentlichen konstanten Kraft beaufschlagt. Eine solche Vorgehensweise kann sich insbesondere auf den Zustand des Lenkrads beziehen, in welchem dieses sich in der Neutralstellung befindet und nicht von einem Bediener betätigt wird.

Zusätzlich oder alternativ hierzu kann die Stelleinrichtung das Lenkrad mit einem vorgebbaren Kraftverlauf beaufschlagen. Der vorgebbare Kraftverlauf kann in Abhängigkeit des Betätigungswegs bzw. der Auslenkung des Lenkrads eine stetige analytische Funktion aufweisen. Die analytische Funktion kann sich zeitlich verändern und hierbei einem veränderten Betriebszustand des Nutzfahrzeugs Rechnung tragen.

Insbesondere wenn das Nutzfahrzeug sich einem unsicheren Betriebszustand nähert oder der Bediener eine Arbeitsfunktion und/oder eine Fahrzeugfunktion missbraucht, kann vorgesehen sein, dass die Stelleinrichtung das in der neutralen Position befindliche oder in einer beliebigen Position befindliche Lenkrad mit einer zeitlich veränderlichen Kraft beaufschlagt. Dies ist insbesondere bei Betriebszuständen hilfreich, bei welchen die jeweils vorliegende Zustandsgröße oder die jeweils vorliegende kritische Größe nicht unmittelbar von dem Bediener wahrgenommen werden kann. Dies kann beispielsweise das Drehmoment betreffen, welches bei einem Traktor über die Zapfwelle auf ein an dem Traktor adaptiertes Arbeitsgerät übertragen wird und welches einen vorgebbaren Grenzwert überschreitet. Dementsprechend kann das Lenkrad von der Stelleinrichtung derart mit einer zeitlich variierten Kraft beaufschlagt werden, dass das Lenkrad eine Art Rüttelbewegung ausführt und den Bediener auf taktile Art und Weise auf einen kritischen Betriebszustand aufmerksam macht.

Ganz allgemein und gemäß einer bevorzugten Ausführungsform wird das Lenkrad mit einer vorgebbaren veränderten Kraft dann beaufschlagt, wenn ein von dem optimalen Betriebszustand abweichender Betriebszustand vorliegt. Ebenfalls ganz allgemein und auch gemäß einer bevorzugten Ausführungsform wird das Lenkrad mit einer vorgebbaren veränderten Kraft dann beaufschlagt, wenn ein von dem sicheren Betriebszustand abweichender Betriebszustand vorliegt.

Im Folgenden wird auf relativ konkrete Situationen eingegangen, bei welchen das Lenkrad mit einer vorgebbaren veränderten Kraft beaufschlagt wird.

Dies ist unter anderem dann der Fall, wenn der aktuelle Betriebszustand bzw. eine aktuelle Zustandsgröße des Nutzfahrzeugs oder einer Arbeitsfunktion des Nutzfahrzeugs einen vorgegebenen Grenzwert über- oder unterschreitet. Hierbei kann es sich beispielsweise um einen über einem maximalen Wert liegenden Druck einer Hydraulikflüssigkeit handeln, mit welcher ein Hydraulikzylinder eines Laders ansteuerbar ist, wobei der Lader an einem Traktor adaptiert sein kann. Eine solche Situation kann beispielsweise auf eine Überlastung beim Anheben der Laderschaufel aufmerksam machen.

Das Lenkrad kann mit einer vorgebbaren veränderten Kraft dann beaufschlagt werden, wenn die Drehzahl einer Welle und/oder die Drehzahl einer Welle eines Arbeitsgeräts von einer vorgegebenen Drehzahl abweicht.

Auch kann das Lenkrad mit einer vorgebbaren veränderten Kraft dann beaufschlagt werden, wenn die Geschwindigkeit des Nutzfahrzeugs von einer vorgegebenen Geschwindigkeit abweicht. Sofern das Nutzfahrzeug eine Arbeitsfunktion ausübt, welche eine Fortbewegung des Fahrzeugs mit einer im Wesentlichen konstanten Geschwindigkeit erfordert (z.B. Einsähen), kann durch die Veränderung der Kraft, mit welcher das Lenkrad beaufschlagt wird, der Bediener auf diesen Umstand hingewiesen werden.

Gemäß einer bevorzugten Ausführungsform ist das Lenkrad mit einer vorgebbaren veränderlichen Kraft beaufschlagbar, welche von der Geschwindigkeit des Nutzfahrzeugs abhängt. Insbesondere bei einer höheren Fahrzeuggeschwindigkeit kann die auf das Lenkrad einwirkende Kraft größer als bei niedrigen Geschwindigkeiten sein.

Bevorzugt ist vorgesehen, dass das Lenkrad mit einer vorgebbaren veränderlichen Kraft beaufschlagbar ist, welche von der Beschaffenheit der Fahrbahn bzw. des Untergrunds abhängt. Insbesondere bei einem unebenen bzw. holprigen Untergrund kann - auch unter Berücksichtigung der aktuellen Fahrzeuggeschwindigkeit - die Gegenkraft zum Einstellen eines größeren Lenkwinkels erhöht werden, um einen besseren Halt des Nutzfahrzeugs auf dem Untergrund zu erzielen.

Das Lenkrad kann mit einer vorgebbaren veränderlichen Kraft beaufschlagt werden, welche von der zum Lenken der Räder aufzubringenden Kraft abhängt. Hierdurch kann dem Bediener an dem Lenkrad eine Rückmeldung der zum Lenken der Räder tatsächlich aufzubringenden Kraft in taktiler Form gegeben werden. Dies ist insbesondere dann zweckmäßig, wenn zwischen dem Lenkrad und dem Lenkzylinder keine durchgehende mechanische Verbindung besteht (Steer-by-Wire).

Weiterhin kann das Lenkrad mit einer vorgebbaren veränderlichen Kraft beaufschlagbar sein, welche von der Abweichung eines Soll-Zustands des Lenkzylinders und/oder von dem eingestellten Lenkwinkel abhängt. Durch diese Maßnahme kann ein Lenkvorgang dahingehend unterstützt werden, dass der Bediener des Nutzfahrzeugs zum Auffinden einer optimalen Sollfahrtrichtung unterstützt wird, wobei es sich bei dieser Unterstützung um einen aktiven Lenkvorschlag und nicht um eine automatisierte Lenkung ("Autopilot") handelt. Die Sollfahrtrichtung kann in diesem Zusammenhang mit Hilfe einer Funkpeilung oder einem Programm zur Bestimmung einer optimalen Sollfahrtrichtung und einem Positionsbestimmungssystem ermittelt werden.

Bevorzugt ist das Lenkrad mit einer vorgebbaren veränderlichen Kraft beaufschlagbar, welche von der Last der Lenkachse oder des gelenkten Rads abhängt. So kann das Lenkrad mit einer vergleichsweise hohen Kraft beaufschlagt werden, wenn die Last auf die Lenkachse des Nutzfahrzeugs einen vergleichsweise großen Wert aufweist. Grundsätzlich kann das Nutzfahrzeug eine Vorderachslenkung aufweisen, welche in Form einer Einzelradaufhängung oder eines starren Achskörpers ausgebildet ist.

Weiterhin kann das Lenkrad mit einer vorgebbaren veränderlichen Kraft beaufschlagbar sein, welche von der Fahrtrichtung abhängt. Insbesondere bei einer Rückwärtsfahrt kann die von der Stelleinrichtung auf das Lenkrad einwirkende Kraft höher als bei einer Vorwärtsfahrt sein. Eine vergleichsweise hohe Kraft kann auch dann von der Stelleinrichtung auf das Lenkrad einwirken, wenn in einer Kurvenfahrt die kommandierte Fahrtrichtung sich dem maximal einstellbaren Lenkwinkel annähert.

In einer besonders bevorzugten Ausführungsform ist das Lenkrad mit einer vorgebbaren veränderlichen Kraft beaufschlagbar, welche von der Sollfahrtrichtung des Nutzfahrzeugs abhängt. So wird die von der Stelleinrichtung auf das Lenkrad ausgeübte Kraft dann erhöht, wenn der Bediener das Lenkrad derart auslenkt, dass das Nutzfahrzeug von der Sollfahrtrichtung abweicht. Die von der Stelleinrichtung auf das Lenkrad ausgeübte Kraft kann dann minimiert sein, wenn der Bediener das Lenkrad derart auslenkt, dass das Nutzfahrzeug im Wesentlichen der Sollfahrtrichtung folgt. Hierdurch kann in vorteilhafter Weise ein Lenksystem basierend auf einem Lenkvorschlag und nicht auf einer automatischen Lenkung realisiert werden.

In einer bevorzugten Ausführungsform ist das Lenkrad mit einer vorgebbaren veränderlichen Kraft beaufschlagbar, welche von einem Führungsmittel oder von der Auslenkung eines Tasters abhängt. Bei dem Taster kann es sich um eine am Traktor angeordnete mechanische Hebelanordnung handeln, welche beispielsweise von in einem Stall ortsfest angeordneten Führungsschienen auslenkbar ist. Grundsätzlich kann der Taster oder das Führungsmittel auf mechanischer, optischer, akustischer und/oder elektrischer Basis arbeiten. So kann mit einem auf Laser oder GPS basierten Positionsermittlungssystem die Relativposition des Traktors ermittelt und mit einer vorgegebenen Fahrtrichtung verglichen werden. Bei Abweichung zwischen vorgegebener Fahrtrichtung und Istfahrtrichtung kann das Lenkrad mit einer entsprechenden Kraft beaufschlagt werden.

In einer bevorzugten Ausführungsform ist vorgesehen, dass das Lenkrad in seiner Neutralposition durch die Stelleinrichtung zumindest in einem bestimmten Betriebszustand des Nutzfahrzeugs mit einer vorgebbaren hohen Kraft beaufschlagbar ist. Das Lenkrad ist aus seiner Neutralposition mit einer entsprechend hohen Kraftaufwendung von dem Bediener einmalig auszulenken, um das Nutzfahrzeug und/oder eine Arbeitsfunktion des Nutzfahrzeugs von einem gesicherten Zustand in einen Betriebszustand zu überführen. Hiermit kann ein so genanntes Kraftschloss erzielt werden. Der Bediener muss zum Ansteuern der Lenkung ein erstes Mal eine relativ hohe Kraft ausüben, um die Lenkung überhaupt zu aktivieren. Wenn die Lenkung dann aktiviert ist, bietet es sich an, das Lenkrad nicht mehr mit der vorgebbaren hohen Kraft zu beaufschlagen und/oder dies erst dann wieder zu tun, wenn das Lenkrad für längere Zeit nicht betätigt wurde. In gleicher Weise kann eine Anfahrquittierung des Nutzfahrzeugs realisiert werden, d.h. die vom Bediener tatsächlich gewollte Ansteuerung wird durch das Überwinden der hohen Kraft quittiert.

Weiterhin kann vorgesehen sein, dass das Lenkrad mit einer vorgebbaren Kraft beaufschlagbar ist, um dem Bediener wahrnehmbar zu machen, dass eine mit dem Lenkrad kommandierte Änderung einer Zustandsgröße des Nutzfahrzeugs oder einer Arbeitsfunktion mittlerweile eingestellt worden ist.

In vergleichbarer Weise kann das Lenkrad mit einer vorgebbaren Kraft beaufschlagbar sein, um dem Bediener wahrnehmbar zu machen, dass ein bestimmter Zustand eines an das Nutzfahrzeug adaptierten Arbeitsgeräts vorliegt. Dies kann beispielsweise der Fall sein, wenn ein Arbeitsgerät zugeschaltet wird und dieses erst nach einer Zeitverzögerung seine Betriebsdrehzahl erreicht. Sobald diese vorliegt, kann das Lenkrad mit einem Kraftimpuls beaufschlagt werden.

Bevorzugt ist die Höhe der Kraft, mit welcher das Lenkrad beaufschlagbar ist, von dem Bediener individuell einstellbar. Hierdurch kann beispielsweise jeder Bediener eine für sich individuell angepasste Bedienungscharakteristik des Lenkrads einstellen und gegebenenfalls abspeichern. Dies ermöglicht eine für ihn individuell angepasste Einstellung der Lenkradcharakteristik und kann somit Fehlbedienungen vermeiden und/oder eine individuelle ergonomische Bedienung ermöglichen.

In einer bevorzugten Ausführungsform ist dem Lenkrad eine vorgebbare Bedienungscharakteristik derart aufprägbar, dass ein Bediener eine - gegebenenfalls von ihm einstellbare - angestrebte Einstellung, eine Auslenkungsposition oder einen Auslenkungsbereich des Lenkrads wiederfinden kann. So kann beispielsweise für eine bestimmte Anwendung - ein Traktor mit einer daran adaptierten Ballenpresse - der zweckmäßige bzw. mögliche Lenkwinkelbereich einzuschränken sein, insbesondere beim Wendemanöver. Dementsprechend kann die von der Stelleinrichtung auf das Lenkrad ausgeübte Kraft derart bemessen sein, dass innerhalb des möglichen Lenkwinkelbereichs des Lenkrads eine relativ geringe Kraft und außerhalb des Lenkwinkelbereichs des Lenkrads eine relativ hohe Kraft auf das Lenkrad ausgeübt wird. Eine individuell angepasste Bedienungscharakteristik für unterschiedliche Anwendungen kann in einer Speichereinrichtung abspeicherbar und wieder aufrufbar sein. Die Speichereinrichtung kann der Steuereinheit zugeordnet sein.

Zusätzlich oder alternativ können individuell angepasste Bedienungscharakteristika in einer dem Bediener zugeordneten Speicherkarte oder in einem dem Bediener zugeordneten und vorzugsweise in einem Fahrzeugschlüssel vorgesehenen RFID-Tag (Radio Frequency Identification Tag) abgespeichert und wieder aufgerufen werden.

In vergleichbarer Weise kann ein einstellbarer "Anschlag" des Lenkrads vorgesehen sein, welcher gegebenenfalls vom Bediener vorgebbar bzw. einstellbar ist. Ein solcher Anschlag kann ein vorgebbarer Wert einer Auslenkposition des Lenkrads sein, welcher nicht überschritten werden sollte, da ansonsten die Gefahr besteht, dass ein Rad der Lenkachse mit einem Bauteil des Fahrzeugchassis oder einer Motorhaube kollidiert, wie dies bei Traktoren auftreten kann.

Gemäß einer bevorzugten Ausführungsform der vorliegenden Erfindung ist das Lenkrad derart mit einer Kraft beaufschlagbar, dass ein Bediener einen ungünstigen Einstellungsbereich eines Betriebszustands einer Arbeitsfunktion oder Zustandsgröße des Nutzfahrzeugs, z.B. die Eigenfrequenz der Reifen bei bestimmten Drehzahlen, meidet. Einen ungünstigen Einstellungsbereich kann auch die motordrehzahlabhängige Eigenfrequenz der Motoraufhängung und/oder die Eigenfrequenz der Fahrzeugkarosserie aufweisen, und es kann daher in vergleichbarer Weise durch entsprechende Kraftbeaufschlagung des Lenkrads dem Bediener signalisiert werden, beispielsweise durch eine Rüttelbewegung oder ein Vibrieren des Lenkrads, diese Einstellung zu meiden.

In einer weiteren Ausführungsform ist das Lenkrad mit einer vorgebbaren Kraft beaufschlagbar, welche im Wesentlichen von dem Zustand eines anderen Bedienelements des Nutzfahrzeugs abhängig ist. Hierdurch kann z.B. eine gegenseitige Verriegelung von mehreren Bedienelementen simuliert werden, beispielsweise das Lenkrad und eine Parksperre. Sofern die Parksperre aktiviert ist, kann auch das Lenkrad in seiner aktuellen Position mit einer relativ hohen Kraft beaufschlagt werden. Diese ist dann zu überwinden, um das Lenkrad auszulenken. Hiermit ist eine mechanische Kopplung eines Bedienelements und des Lenkrads, welche unter Umständen erforderlich wäre, nicht erforderlich.

Es kann vorgesehen sein, dass die von der Stelleinrichtung auf das Lenkrad ausgeübte Kraft von dem Bediener übersteuerbar und/oder abschaltbar ist. Eine Übersteuerung der auf das Lenkrad ausgeübten Kraft durch den Bediener sollte im Allgemeinen möglich sein, denn der Bediener soll nicht nur das Gefühl haben, dass er die Kontrolle über die Bedienung des Fahrzeugs hat. Vielmehr soll aus Sicherheitsgründen das Fahrzeug von dem Bediener auch dann bedient werden können, wenn das Lenkrad mit einer falschen Kraft beaufschlagt wird. Dies kann dann der Fall sein, wenn der mindestens eine Sensor eine Größe fehlerhaft detektiert oder die detektierte Größe fehlerhaft interpretiert wird, wenn dies auch nur mit einer geringen Wahrscheinlichkeit auftritt.

Wie bereits angedeutet, kann zusätzlich zum Beaufschlagen des Lenkrads mit einer vorgebbaren Kraft ein visuelles und/oder akustisches Signal erzeugt werden. Dies bietet sich insbesondere dann an, wenn ein sicherer Betriebszustand des Nutzfahrzeugs und/oder einer Arbeitsfunktion verlassen wird. In diesem Fall kann beispielsweise eine an dem Lenkrad vorgesehene Lichtquelle aktiviert werden, eventuell mit zunehmender Lichtstärke bei zunehmendem Gefährlichkeitsgrad. Zusätzlich oder alternativ kann ein akustisches Signal in Form eines Warntons, gegebenenfalls mit zunehmender Lautstärke, erzeugt und dem Bediener zur Kenntnis gebracht werden. Somit kann vorgesehen sein, dass ein Bediener taktil und visuell an dem Lenkrad sowie akustisch über einen Lautsprecher in der Kabine vor einem Sicherheitsrisiko gewarnt werden kann.

Das Nutzfahrzeug, welches eine erfindungsgemäße Bedienvorrichtung aufweist, kann eine selbstfahrende Arbeitsmaschine bzw. eine Zugmaschine des Bereichs Landwirtschaft, Bau oder Forst sein. Insbesondere kann das Nutzfahrzeug in Form eines Traktors, einer Erntemaschine, eines Mähdreschers, eines Feldhäckslers, einer Baumaschine und/oder einer Forstmaschine ausgebildet sein.

Die eingangs genannte Aufgabe wird hinsichtlich eines landwirtschaftlichen oder industriellen Nutzfahrzeugs, insbesondere Traktors, durch die Merkmale des Patentanspruchs 14 gelöst. Demgemäß weist ein solches Nutzfahrzeug eine Bedienvorrichtung nach einem der Patentansprüche 1 bis 13 auf. Der auf dem vorliegenden Gebiet tätige Fachmann wird in Kenntnis einer erfindungsgemäßen Bedienvorrichtung gemäß einem der Patentansprüche 1 bis 13 sowie der hierzu gemachten Ausführungen diese Technologie auf ein landwirtschaftliches oder industrielles Nutzfahrzeug anwenden können und hierbei die besonderen Eigenschaften des jeweiligen Nutzfahrzeugs in Zusammenhang mit der erfindungsgemäßen Bedienvorrichtung gemäß einem der Patentansprüche 1 bis 13 berücksichtigen können. Dies betrifft insbesondere ein Lenksystem eines Ketten- oder eines Raupenfahrzeugs. Insoweit wird zur Vermeidung von Wiederholungen auf den vorangegangenen Teil der Beschreibung verwiesen.

In verfahrensmäßiger Hinsicht wird die eingangs genannte Aufgabe durch die Merkmale des Patentanspruchs 15 gelöst. Demgemäß dient ein erfindungsgemäßes Verfahren zum Ansteuern mindestens einer Zustandsgröße eines landwirtschaftlichen oder industriellen Nutzfahrzeugs. Die Bedienvorrichtung umfasst ein Lenkrad, eine Stelleinrichtung, mindestens einen Sensor und eine Steuereinrichtung. Das Lenkrad wird zum Einstellen der Fahrtrichtung des Nutzfahrzeugs von dem Bediener betätigt. Mit der Stelleinrichtung wird das Lenkrad mit einer Kraft beaufschlagt. Mit dem mindestens einen Sensor wird eine Größe, die eine Zustandsgröße des Nutzfahrzeugs repräsentiert, detektiert und der Steuereinrichtung übermittelt. Mit der Steuereinrichtung wird eine Zustandsgröße des aktuellen Betriebszustands des Nutzfahrzeugs ermittelt. Mit der Steuereinrichtung wird in Abhängigkeit des aktuellen Betriebszustands des Nutzfahrzeugs die Stelleinrichtung derart angesteuert, dass das Lenkrad mit einer vorgebbaren veränderten Kraft beaufschlagt wird, um dem Bediener einen unsicheren Betriebszustand des Nutzfahrzeugs oder einen unsicheren Betriebszustand mindestens einer Arbeitsfunktion wahrnehmbar zu machen.

Dementsprechend wird durch das erfindungsgemäße Verfahren zum Ansteuern mindestens einer Zustandsgröße eines Nutzfahrzeugs eine verbesserte Bedienung des Nutzfahrzeugs realisiert, wodurch beispielsweise die Einlernphase eines neuen Bedieners in die unter Umständen komplexe Bedienung des Nutzfahrzeugs verkürzt werden kann und/oder die Bedienung des Nutzfahrzeugs erheblich vereinfacht oder intuitiver gestaltet werden kann. Bevorzugt wird mit dem erfindungsgemäßen Verfahren mindestens eine Zustandsgröße mit einer Bedienvorrichtung nach einem der Patentansprüche 1 bis 13 eingestellt. Daher wird ein auf dem vorliegenden Gebiet tätiger Fachmann in Kenntnis der erfindungsgemäßen Bedienvorrichtung gemäß einem der Patentansprüche 1 bis 13 sowie der hierzu gemachten Ausführungen diese Technologie auf ein Verfahren zum Ansteuern eines bestimmten landwirtschaftlichen oder industriellen Nutzfahrzeugs anwenden können und hierbei die besonderen Eigenschaften des jeweiligen Nutzfahrzeugs beim Ausbilden des Ansteuerverfahrens berücksichtigen können. Insoweit wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert. In den Zeichnungen zeigen jeweils in einer schematischen Darstellung:
- Fig. 1: ein Ausführungsbeispiel einer erfindungsgemäßen Bedienvorrichtung,
- Fig. 2: ein Ausführungsbeispiel eines landwirtschaftlichen Nutzfahrzeugs mit einer erfindungsgemäßen Bedienvorrichtung,
- Fig. 3a: ein Gespann, bestehend aus einem landwirtschaftlichen Nutzfahrzeug und einem Anhänger, welches neben einer Erntemaschine herfährt,
- Fig. 3b: ein Diagramm der auf das Lenkrad ausgeübten Kraft in Abhängigkeit der Relativposition zwischen Gespann und Erntemaschine,
- Fig. 4a: ein landwirtschaftliches Nutzfahrzeug, welches nicht auf Hindernisse zufahren soll,
- Fig. 4b: ein Diagramm der auf das Lenkrad ausgeübten Kraft in Abhängigkeit der Fahrtrichtung relativ zum Hindernis,
- Fig. 5a: ein landwirtschaftliches Nutzfahrzeug, welches ein Wendemanöver durchführt, und
- Fig. 5b: ein Diagramm der auf das Lenkrad ausgeübten Kraft in Abhängigkeit von einem für das Wendemanöver vorgebbaren Lenkeinschlag.

In den Figuren sind gleiche oder ähnliche Bauteile mit denselben Bezugszeichen gekennzeichnet.

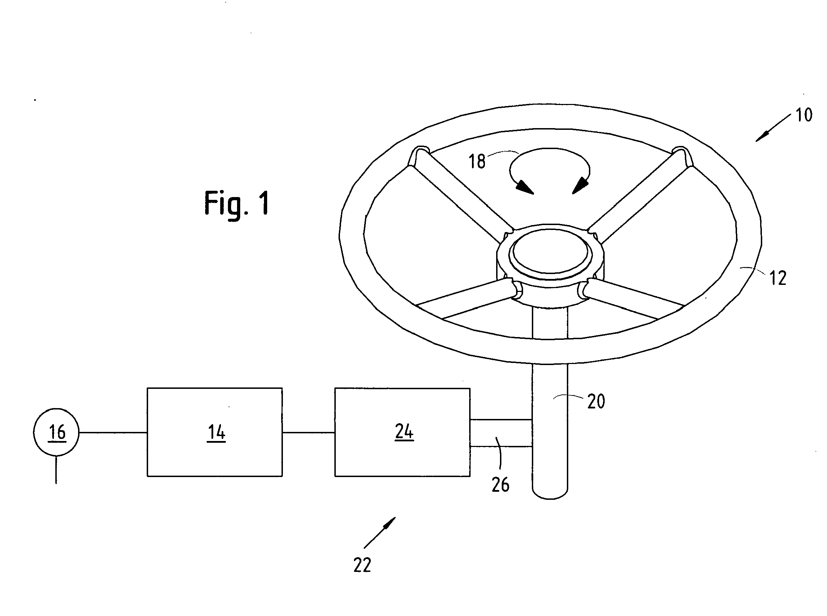

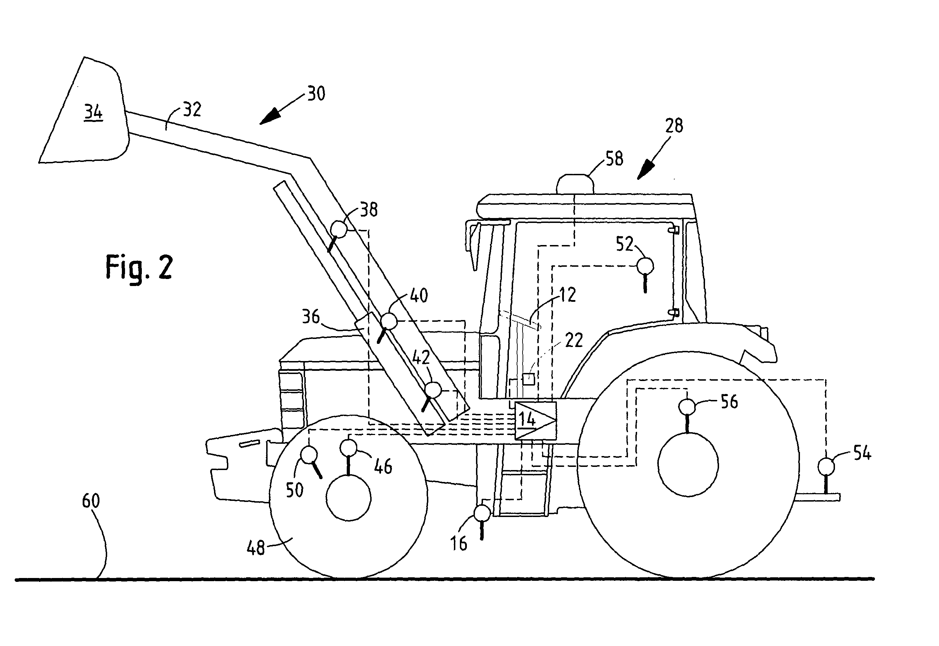

Fig. 1 zeigt ein Ausführungsbeispiel einer erfindungsgemäßen Bedienvorrichtung 10. Die in Fig. 1 gezeigte Bedienvorrichtung 10 weist ein Lenkrad 12, eine Steuereinrichtung 14 und einen Sensor 16 auf. Das Lenkrad 12 kann in zwei entgegengesetzte Richtungen (mit dem Doppelpfeil 18 angedeutet) ausgelenkt werden. Die in Fig. 1 gezeigte Bedienvorrichtung 10 steuert die Fahrtrichtung des Nutzfahrzeugs dadurch, dass die Auslenkung des Lenkrads 12 in eine Auslenkung einer Vorderachse eines in Fig. 2 gezeigten und in Form eines Traktors ausgebildeten landwirtschaftlichen Nutzfahrzeugs überführt wird.

Die Bedienvorrichtung 10 umfasst des Weiteren eine Lenksäule 20 und eine Stelleinrichtung 22, welche einen Aktuator 24 aufweist. Der Aktuator 24 weist einen Elektromotor auf, welcher von der Steuereinrichtung 14 über eine (nicht separat eingezeichnete) Leistungselektronik ansteuerbar ist. Zum Übertragen des vom Elektromotor erzeugten Drehmoments auf die Lenksäule 20 ist ein schematisch eingezeichnetes Summierungsgetriebe 26 vorgesehen. Der Aktuator 24 beaufschlagt über das Summierungsgetriebe 26 das Lenkrad 12 mit einem Drehmoment, welches in Richtung des Uhrzeigersinns oder in entgegengesetzter Richtung wirken kann.

An dem Aktuator 24 bzw. an dem Summierungsgetriebe 26 ist ein nicht eingezeichneter Sensor vorgesehen, mit welchem die aktuelle Stellung des Lenkrads 12 ermittelbar ist, welche der Steuereinrichtung 14 zugeleitet werden kann. Der Sensor 16 detektiert die Fahrtgeschwindigkeit des Nutzfahrzeugs, welche der Steuereinrichtung 14 übermittelt wird.

Erfindungsgemäß wird mit der Steuereinrichtung 14 in Abhängigkeit des aktuellen Lenkwinkels die Stelleinrichtung 22 und somit der Aktuator 24 derart angesteuert, dass das Lenkrad 12 mit einer vorgebbaren veränderten Kraft beaufschlagbar ist. Hierdurch kann einem in Fig. 1 nicht gezeigten Bediener ein nicht optimaler oder unsicherer Betriebszustand des Nutzfahrzeugs bzw. des Traktors wahrnehmbar gemacht werden. Dementsprechend kann durch das Beaufschlagen des Lenkrads 12 mit einer vorgebbaren veränderten Kraft durch die Stelleinrichtung 22 die Bedienungscharakteristik des Lenkrads 12 verändert werden.

Fig. 2 zeigt ein landwirtschaftliches Nutzfahrzeug, nämlich einen Traktor 28, welcher die erfindungsgemäße Bedienvorrichtung 10 aus Fig. 1 aufweist. An dem Traktor 28 ist ein Frontlader 30 adaptiert, welcher einen Ausleger 32 und eine Laderschaufel 34 aufweist. Der Ausleger 32 des Frontladers 30 kann mit einem doppeltwirkenden Hydraulikzylinder 36 angehoben bzw. abgesenkt werden.

An dem Traktor 28 bzw. dem Frontlader 30 sind mehrere Sensoren angeordnet, wobei nicht alle Sensoren zum Ausführen der vorliegenden Erfindung erforderlich sind. So kann mit dem Sensor 38 der Ausfahrweg der Kolbenstange des Hydraulikzylinders 36 bestimmt werden. Mit dem Sensor 40 kann die Veränderung des Volumenstroms der Hydraulikflüssigkeit gemessen werden, welche dem Hydraulikzylinder 36 zugeführt wird bzw. welche vom Hydraulikzylinder 36 abfließt. Mit dem Sensor 42 kann der im Kolbenraum des Hydraulikzylinders 36 vorliegende Druck der Hydraulikflüssigkeit gemessen werden. Der Sensor 16 detektiert die Fahrzeuggeschwindigkeit über dem Untergrund 60. Der Sensor 46 detektiert die Drehzahl des linken Vorderrads 48. Für die anderen drei Räder sind ebenfalls Sensoren vorgesehen, welche jedoch in Fig. 2 nicht gezeigt sind. Der Sensor 50 detektiert den eingestellten Lenkwinkel des Vorderrads 48. Der Sensor 52 detektiert die Beschleunigung des Traktors 28. Der Sensor 54 detektiert die Kraft, welche ein an den Traktor 28 adaptiertes, in Fig. 2 nicht gezeigtes Arbeitsgerät in den Traktor 28 einleitet. Mit dem Sensor 56 kann das auf den hinteren Fahrantrieb übertragene Drehmoment detektiert werden. Weiterhin ist ein GPS-Empfänger 58 vorgesehen, mit welchem GPS-Positionssignale empfangen werden können, aus welchen die Steuereinheit 14 die aktuelle Position des Traktors 28 ermitteln kann. Sämtliche Sensoren sind mittels elektrischer Leitungsverbindungen mit der Steuereinheit 14 verbunden (gestrichelt eingezeichnet). Auch ist die Stelleinrichtung 22 mit dem in Fig. 2 nicht gezeigten Aktuator mit der Steuereinrichtung 14 verbunden. Obwohl in Fig. 2 nicht gezeigt, können noch weitere Sensoren vorgesehen sein, mit welchen weitere Größen detektierbar sind und aus welchen sich eine entsprechende Zustandsgröße des Nutzfahrzeugs oder einer Arbeitsfunktion bzw. aus welchen sich eine Zustandsgröße eines an das Nutzfahrzeug adaptierten Arbeitsgeräts ableiten bzw. bestimmen lässt.

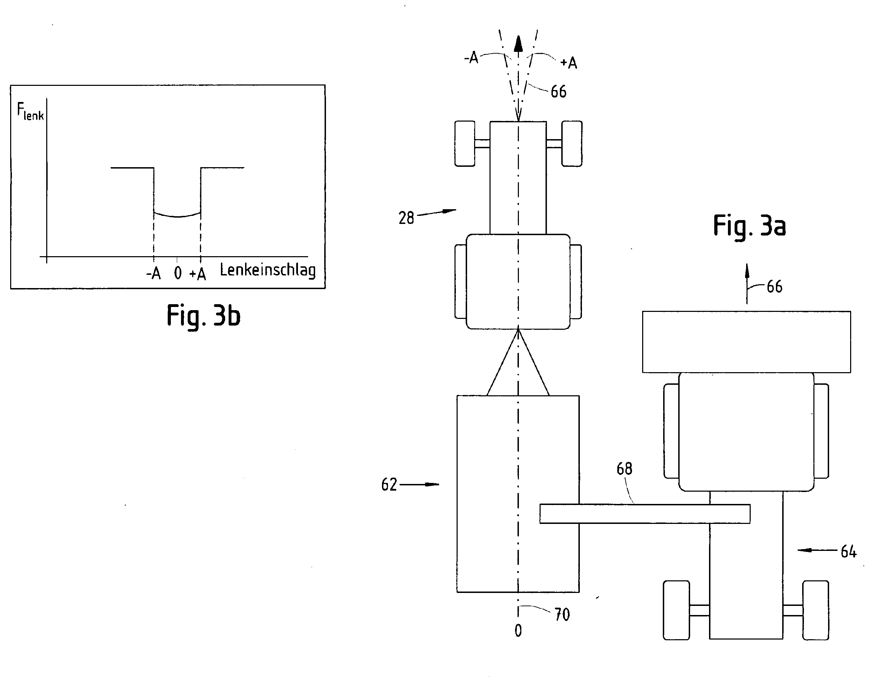

Mit den in Fig. 3a, 4a und 5a angedeuteten Darstellungen und den dazugehörigen Diagrammen von Fig. 3b, 4b und 5b der auf das Lenkrad 12 jeweils ausgeübten Kraft in Abhängigkeit des jeweils einzustellenden Lenkwinkels werden lediglich einige der Ausführungsbeispiele einer erfindungsgemäßen Bedienvorrichtung dargestellt, wobei eine Vielzahl weiterer Ausführungsbeispiele denkbar ist, bei welchen eine erfindungsgemäße Bedieneinrichtung zum Ansteuern mindestens einer Zustandsgröße eines landwirtschaftlichen oder industriellen Nutzfahrzeugs zum Einsatz kommen kann.

Fig. 3a zeigt ein Gespann, bestehend aus einem Traktor 28 und einem Anhänger 62. Neben dem Traktor 28 fährt eine Erntemaschine 64 in die gleiche Richtung (jeweils durch einen Pfeil 66 angedeutet). Die Erntemaschine 64 weist eine Überladevorrichtung 68 auf, mit welcher Erntegut in den Anhänger 62 verbracht wird. Bei diesem Überladevorgang ist es erforderlich, dass die Relativposition zwischen dem Anhänger 62 und der Erntemaschine 64 im Wesentlichen unverändert bleibt. Mit dem Bezugszeichen 70 ist gestrichelt eine Bezugslinie eingezeichnet, bezüglich welcher der Anhänger 62 zur Fahrtrichtung 66 eine ideale bzw. vorgebbare Relativposition aufweist. Somit ist der Lenkwinkeleinschlag des Traktors 28 an denjenigen der Erntemaschine 64 bzw. an die Position der Erntemaschine 64 anzupassen. Dieser Vorgang wird durch die erfindungsgemäße Bedienvorrichtung unterstützt. Die Bedienvorrichtung ist in dem Traktor 28 implementiert. Demgemäß wird das Lenkrad des Traktors 28 mit einer Kraft beaufschlagt, deren Kennlinie in dem Diagramm aus Fig. 3b gezeigt ist. In diesem Diagramm ist die von der Stelleinrichtung auf das Lenkrad ausgeübte Kraft in Abhängigkeit des Lenkwinkeleinschlags relativ zu der Bezugslinie 70 aufgetragen. Dem Diagramm ist entnehmbar, dass in dem Lenkwinkelbereich zwischen -A und A eine relativ geringe Kraft von der Stelleinrichtung auf das Lenkrad ausgeübt wird. Diese Kraft hat bei 0 den geringsten Wert und steigt innerhalb des Lenkwinkelbereichs leicht bzw. streng monoton an. Die den Werten -A und A entsprechenden Lenkwinkel sind auch in Fig. 3a eingezeichnet und sollen im Wesentlichen den Lenkwinkelbereich kennzeichnen, in welchem der Überladevorgang zwischen Erntemaschine 64 und Anhänger 62 gerade noch möglich ist. Sollte sich allerdings das Gespann 28, 62 von der Erntemaschine 64 weiter entfernen (liegt also z.B. ein Lenkwinkel -A vor), so kann eine andere als in Fig. 3b gezeigte Kraftkennlinie in Abhängigkeit des Lenkeinschlags - sozusagen dynamisch - verwendet werden. Hierzu wäre ein entsprechendes Ansteuerprogramm in der Steuereinrichtung vorzusehen.

Dementsprechend existiert eine Lenkradposition und ein dementsprechender Achseinschlag, in welchem der Bediener eine relativ geringe Kraft zum Bedienen des Lenkrads aufwenden muss und daher beim Einhalten der Fahrtrichtung unterstützt wird. Will er einen größeren Lenkwinkel einstellen, muss er eine höhere Kraft auf das Lenkrad ausüben. Grundsätzlich kann eine Bedienvorrichtung auch in der Erntemaschine 64 vorgesehen sein.

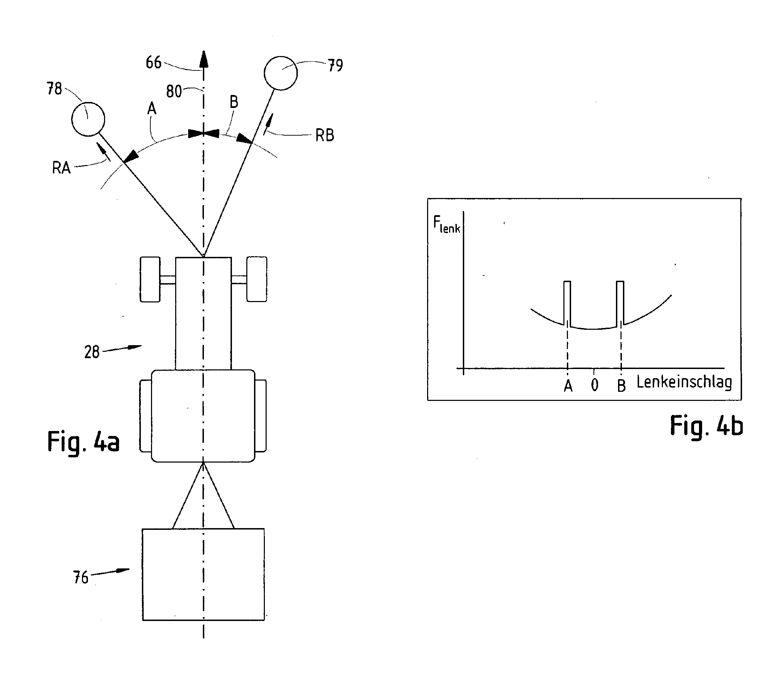

Fig. 4a zeigt einen Traktor 28, an welchem eine Ballenpresse 76 adaptiert ist. Das Gespann, bestehend aus Traktor 28 und Ballenpresse 76, bewegt sich entlang der Fahrtrichtung 66. Ausgehend von der in Fig. 4a gezeigten Position des Gespanns befindet sich unter dem Winkel A und in Richtung RA ein erstes Hindernis 78, welches in Form eines Baumes oder eines (im Feld in der Regel nicht sichtbaren) Gullydeckels ausgebildet sein kann. Unter dem Winkel B und in Richtung RB befindet sich ein zweites Hindernis 79, welches ebenfalls ein Baum sein kann. Informationen über Hindernisse oder sonstige Begebenheiten des Feldes können beispielsweise in einem auf einem Rechner des Traktors implementierten Programm, welches mit einem Navigationssystem gekoppelt ist, in einer Landkarte des Feldes eingegeben werden. Fig. 4b zeigt in einem Diagramm die auf das Lenkrad von der Stelleinrichtung ausgeübte Kraft in Abhängigkeit des Lenkeinschlags relativ zur Bezugslinie 80, welche in Fig. 4a die Geradeausfahrt des Gespanns kennzeichnet. Dementsprechend wird das Lenkrad von der Stelleinrichtung mit zunehmendem Lenkeinschlag mit einer zunehmenden Kraft beaufschlagt, so dass der Bediener eine größere Kraft aufbringen muss, um den Lenkwinkel zu vergrößern. Wenn er jedoch genau auf eines der Hindernisse 78, 79 zufährt, also den Lenkeinschlag A oder B wählt, wird ihm auf Grund der rechteckförmigen Kraftwirkung letztendlich signalisiert, dass er sich auf das Hindernis 78 bzw. 79 zubewegt. Die Höhe der Gegenkraft bei dem Lenkwinkeleinschlag A bzw. B ist abhängig von dem Abstand zwischen Traktor 28 und Hindernis 78 bzw. 79. Je geringer der Abstand zu dem jeweiligen Hindernis ist, desto größer ist die von der Stelleinrichtung auf das Lenkrad einwirkende Gegenkraft. Dementsprechend kann verhindert werden, dass der Traktor 28 auf das Hindernis 78 bzw. 79 zufährt.

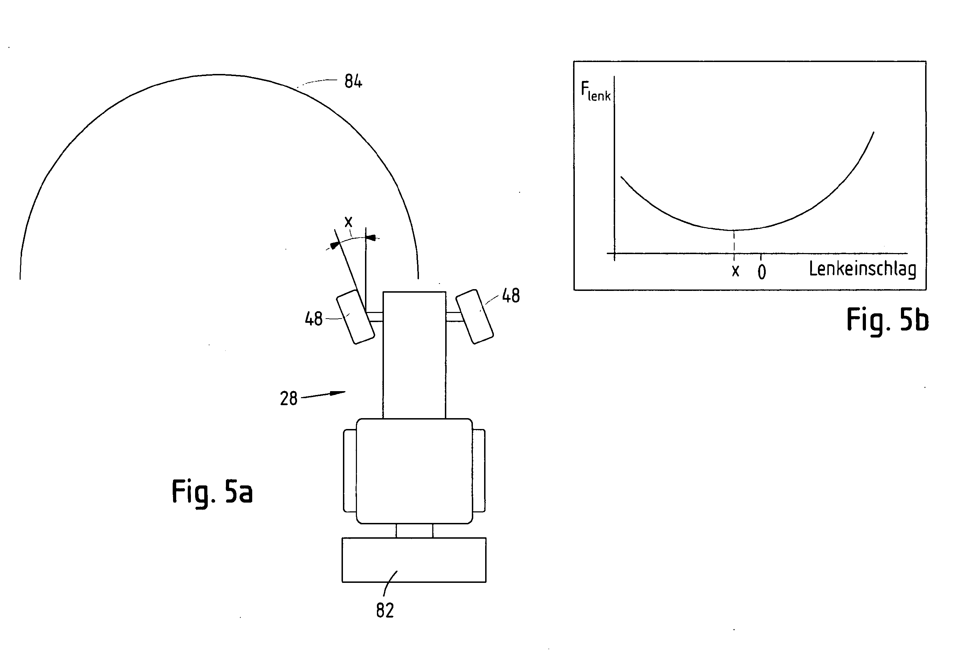

Fig. 5a zeigt einen Traktor 28, an welchem ein Pflug 82 adaptiert ist. Der Traktor 28 führt einen Wendevorgang aus, wobei die Sollfahrtrichtung für den Wendevorgang mit dem Bezugszeichen 84 gekennzeichnet ist. Hierzu wären die Vorderräder 48 des Traktors 28 in einen Lenkeinschlag zu verbringen, welcher in Fig. 5a mit dem Winkel X gekennzeichnet ist. Fig. 5b zeigt in einem Diagramm die auf das Lenkrad von der Stelleinrichtung ausgeübte Kraft in Abhängigkeit von dem Lenkeinschlag der Vorderräder 48 des Traktors 28. Bei dem Lenkeinschlag X ist die von der Stelleinrichtung auf das Lenkrad ausgeübte Kraft minimal. Das Lenkrad wird von der Stelleinrichtung mit einer größeren Kraft beaufschlagt, wenn ein von dem Lenkeinschlag X abweichender, größerer oder kleinerer Lenkeinschlag gewählt wird. Dementsprechend muss der Bediener eine größere Kraft aufbringen, um von dem Lenkwinkel X abzuweichen.

Abschließend sei darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Bedienvorrichtung zum Ansteuern mindestens einer Zustandsgröße eines landwirtschaftlichen oder industriellen Nutzfahrzeugs, mit einem Lenkrad (12), einer Stelleinrichtung (22), mindestens einem Sensor (16) und einer Steuereinrichtung (14), wobei das Lenkrad (12) zum Einstellen der Fahrtrichtung des Nutzfahrzeugs von einem Bediener betätigbar ist, wobei mit der Stelleinrichtung (22) das Lenkrad (12) mit einer Kraft beaufschlagbar ist, wobei mit dem mindestens einen Sensor (16) eine Größe, die eine Zustandsgröße des Nutzfahrzeugs (28) repräsentiert, detektierbar und der Steuereinrichtung (14) übermittelbar ist, wobei mit der Steuereinrichtung (14) eine Zustandsgröße eines aktuellen Betriebszustands des Nutzfahrzeugs (28) ermittelbar ist, wobei mit der Steuereinrichtung (14) in Abhängigkeit des aktuellen Betriebszustands des Nutzfahrzeugs (28) die Stelleinrichtung (22) derart ansteuerbar ist, dass das Lenkrad (12) mit einer vorgebbaren veränderten Kraft beaufschlagbar ist, um dem Bediener ein Abweichen von einem sicheren und/oder optimalen Betriebszustand des Nutzfahrzeugs (28) oder von einem sicheren und/oder optimalen Betriebszustand mindestens einer Arbeitsfunktion (30) wahrnehmbar zu machen, **dadurch gekennzeichnet, dass** die Vorgabe der veränderten Kraft mittels der Stelleinrichtung (22) derart erfolgt, dass dem Lenkrad (12) ein Verstellwiderstand aufgeprägt wird, der mit dem Betrag der Differenz zwischen einer momentanen Stellung des Lenkrads (12) und einer bezüglich des sicheren und/oder optimalen Betriebszustands des Nutzfahrzeugs (28) oder der mindestens einen Arbeitsfunktion (30) berechneten Stellung des Lenkrads (12) zunimmt.

2. Bedienvorrichtung nach Anspruch 1, **dadurch gekennzeichnet, dass** die Stelleinrichtung (22) das Lenkrad (12) mit einem vorgebbaren Kraftverlauf beaufschlagt, wobei der Kraftverlauf in Abhängigkeit des Drehwinkels des Lenkrads (12) eine stetige analytische Funktion aufweist.

3. Bedienvorrichtung nach Anspruch 1 oder 2, **dadurch gekennzeichnet, dass** die Stelleinrichtung (22) das in der neutralen Position befindliche oder in einer beliebigen Position befindliche Lenkrad (12) mit einer zeitlich veränderlichen Kraft beaufschlagt.

4. Bedienvorrichtung nach einem der Ansprüche 1 bis 3, **dadurch gekennzeichnet, dass** das Lenkrad (12) mit einer vorgebbaren veränderten Kraft dann beaufschlagt wird, wenn der aktuelle Betriebszustand und/oder eine aktuelle Zustandsgröße des Nutzfahrzeugs (28) oder einer Arbeitsfunktion des Nutzfahrzeugs (28) einen vorgegebenen Grenzwert über- oder unterschreitet.

5. Bedienvorrichtung nach einem der Ansprüche 1 bis 4, **dadurch gekennzeichnet, dass** das Lenkrad (12) mit einer vorgebbaren Kraft beaufschlagbar ist, um dem Bediener wahrnehmbar zu machen, dass ein bestimmter Zustand eines an das Nutzfahrzeug (28) adaptierten Arbeitsgeräts (30) vorliegt.

6. Bedienvorrichtung nach einem der Ansprüche 1 bis 5, **dadurch gekennzeichnet, dass** dem Lenkrad (12) eine vorgebbare Bedienungscharakteristik derart aufprägbar ist, dass ein Bediener eine angestrebte Einstellung, eine Auslenkungsposition oder einen Auslenkungsbereich des Lenkrads (12) wiederfinden kann.

7. Bedienvorrichtung nach einem der Ansprüche 1 bis 6, **dadurch gekennzeichnet, dass** das Lenkrad (12) derart mit einer Kraft beaufschlagbar ist, dass ein Bediener einen ungünstigen Einstellungsbereich eines Betriebszustands einer Arbeitsfunktion (30) oder einer Zustandsgröße des Nutzfahrzeugs (28) meidet.

8. Bedienvorrichtung nach einem der Ansprüche 1 bis 7, **dadurch gekennzeichnet, dass** die von der Stelleinrichtung (22) auf das Lenkrad (12) ausgeübte Kraft von dem Bediener übersteuerbar und/oder abschaltbar ist.

9. Bedienvorrichtung nach einem der Ansprüche 1 bis 8, **dadurch gekennzeichnet, dass** zusätzlich zum Beaufschlagen des Lenkrads (12) mit einer vorgebbaren Kraft ein visuelles und/oder akustisches Signal erzeugbar ist.

10. Landwirtschaftliches oder industrielles Nutzfahrzeug, insbesondere Traktor, welches eine Bedienvorrichtung (10) nach einem der Ansprüche 1 bis 9 aufweist.

## Claims

1. Operating device for controlling at least one state variable of an agricultural or industrial utility vehicle, comprising a steering wheel (12), an adjusting device (22), at least one sensor (16) and a control device (14), for setting the direction of travel of the utility vehicle, the steering wheel (12) being able to be actuated by the operator, by means of the adjusting device (22) the steering wheel (12) being able to be acted upon by a force, by means of the at least one sensor (16) a variable representing a state variable of the utility vehicle (28) being able to be detected and transmitted to the control device (14), by means of the control device (14) a state variable of a current operating state of the utility vehicle (28) being able to be detected, by means of the control device (14), depending on the current operating state of the utility vehicle (28), the adjusting device (22) being able to be controlled such that the steering wheel (12) may be acted upon by a predeterminable altered force, in order to make the operator aware of a deviation from a safe and/or an optimal operating state of the utility vehicle (28) or a safe and/or an optimal operating state of at least one operating function (30), **characterized in that** the altered force is predefined by means of the adjusting device (22) in such a way that a displacement resistance is imparted to the steering wheel (12), which displacement resistance increases with the magnitude of the difference between a current position of the steering wheel (12) and a position of the steering wheel (12) calculated with regard to the safe and/or optimal operating state of the utility vehicle (28) or of the at least one operating function (30).

2. Operating device according to Claim 1, **characterized in that** the adjusting device (22) acts upon the steering wheel (12) with a predeterminable force path, the force path depending on the rotational angle of the steering wheel (12) having a constant analytical function.

3. Operating device according to Claim 1 or 2, **characterized in that** the adjusting device (22) acts upon the steering wheel (12) located in the neutral position or in any position with a temporally variable force.

4. Operating device according to one of Claims 1 to 3, **characterized in that** the steering wheel (12) is acted upon by a predeterminable variable force, when the current operating state and/or a current state variable of the utility vehicle (28) or an operating function of the utility vehicle (28) exceeds or falls below a predetermined threshold value.

5. Operating device according to one of Claims 1 to 4, **characterized in that** the steering wheel (12) is able to be acted upon by a predeterminable force, in order to make the operator aware that a specific state of an implement (30) adapted to the utility vehicle (28) is present.

6. Operating device according to one of Claims 1 to 5, **characterized in that** a predeterminable operating characteristic is able to be marked on the steering wheel (12), such that an operator may relocate a desired setting, a deflected position or a deflection range of the steering wheel (12).

7. Operating device according to one of Claims 1 to 6, **characterized in that** the steering wheel (12) is able to be acted upon by a force such that an operator avoids a disadvantageous adjustment range of an operating state of an operating function (30) or of a state variable of the utility vehicle (28).

8. Operating device according to one of Claims 1 to 7, **characterized in that** the force exerted by the adjusting device (22) on the steering wheel (12) is able to be overridden and/or switched off by the operator.

9. Operating device according to one of Claims 1 to 8, **characterized in that** additionally to subjecting the steering wheel (12) to a predeterminable force, a visual and/or acoustic signal may be generated.

10. Agricultural or industrial utility vehicle, in particular tractor, which has an operating device (10) according to one of Claims 1 to 9.

## Revendications

1. Dispositif de commande pour commander au moins une valeur d'état d'un véhicule utilitaire agricole ou industriel, comprenant un volant de direction (12), un système de réglage (22), au moins un capteur (16) et un système de commande (14), le volant de direction (12) pouvant être actionné par un opérateur pour ajuster la direction de conduite du véhicule utilitaire, le volant de direction (12) pouvant être sollicité avec une force par le système de réglage (22), une valeur, qui représente une valeur d'état du véhicule utilitaire (28), pouvant être détectée avec l'au moins un capteur (16) et être transmise au système de commande (14), une valeur d'état d'un état de fonctionnement actuel du véhicule utilitaire (28) pouvant être déterminée avec le système de commande (14), le système de réglage (22) pouvant être commandé avec le système de commande (14) en fonction de l'état de fonctionnement actuel du véhicule utilitaire (28) de telle sorte que le volant de direction (12) puisse être sollicité avec une force modifiée prédéfinissable, afin d'indiquer à l'opérateur un écart par rapport à un état de fonctionnement sûr et/ou optimal du véhicule utilitaire (28) et/ou par rapport à un état de fonctionnement sûr et/ou optimal d'au moins une fonction de travail (30), **caractérisé en ce que** la prescription de la force modifiée s'effectue au moyen du système de réglage (22) de telle sorte qu'une résistance au mouvement soit conférée au volant de direction (12), laquelle augmente avec la valeur de la différence entre un position instantanée du volant de direction (12) et une position du volant de direction (12) calculée en rapport avec l'état de fonctionnement sûr et/ou optimal du véhicule utilitaire (28) ou de l'au moins une fonction de travail (30).

2. Dispositif de commande selon la revendication 1, **caractérisé en ce que** le système de réglage (22) sollicite le volant de direction (12) avec une courbe de force prédéfinissable, la courbe de force présentant une fonction analytique constante en fonction de l'angle de rotation du volant de direction (12).

3. Dispositif de commande selon la revendication 1 ou 2, **caractérisé en ce que** le système de réglage (22) sollicite le volant de direction (12) se trouvant dans la position neutre ou dans une position quelconque avec une force variable dans le temps.

4. Dispositif de commande selon l'une quelconque des revendications 1 à 3, **caractérisé en ce que** le volant de direction (12) est sollicité avec une force modifiée prédéfinissable lorsque l'état de fonctionnement actuel et/ou une valeur d'état actuelle du véhicule utilitaire (28) ou d'une fonction de travail du véhicule utilitaire (28) est supérieur(e) ou inférieur(e) à une valeur limite prédéfinie.

5. Dispositif de commande selon l'une quelconque des revendications 1 à 4, **caractérisé en ce que** le volant de direction (12) peut être sollicité avec une force prédéterminable, afin d'indiquer à l'opérateur la présence d'un état déterminé d'un appareil de travail (30) adapté au véhicule utilitaire (28).

6. Dispositif de commande selon l'une quelconque des revendications 1 à 5, **caractérisé en ce que** l'on peut conférer au volant de direction (12) une caractéristique de commande prédéfinissable, de telle sorte qu'un opérateur puisse retrouver un ajustement souhaité, une position de braquage ou une plage de braquage du volant de direction (12).

7. Dispositif de commande selon l'une quelconque des revendications 1 à 6, **caractérisé en ce que** le volant de direction (12) peut être sollicité par une force de telle sorte qu'un opérateur évite une plage d'ajustement défavorable d'un état de fonctionnement d'une fonction de travail (30) ou d'une valeur d'état du véhicule utilitaire (28).

8. Dispositif de commande selon l'une quelconque des revendications 1 à 7, **caractérisé en ce que** la force exercée par le système de réglage (22) sur le volant de direction (12) peut être neutralisée ou coupée par l'opérateur.

9. Dispositif de commande selon l'une quelconque des revendications 1 à 8, **caractérisé en ce qu'**en plus de la sollicitation du volant de direction (12) par une force prédéfinissable, un signal visuel et/ou acoustique peut être produit.

10. Véhicule utilitaire agricole ou industriel, notamment tracteur, qui présente un dispositif de commande (10) selon l'une quelconque des revendications 1 à 9.
